# FASCICULE DE BREVET EUROPEEN

(11) **EP 2 073 299 B1**
(45) Date de publication et mention de la délivrance du brevet: **31.08.2011**
(21) Numéro de dépôt: 08171620.1
(22) Date de dépôt: 15.12.2008
(51) Int. Cl.: H01M 8/24, H01M 8/10

(54) **Pile à combustible à assemblage plan à étanchéité simplifiée**
Brennstoffzelle zum flachen Zusammenbau mit vereinfachter Abdichtung
Fuel cell with flat assembly and simplified seal

(30) Priorité: 17.12.2007 FR 0759896
(43) Date de publication de la demande: 24.06.2009
(73) Titulaire: Commissariat à l'Énergie Atomique et aux Énergies Alternatives, 75015 Paris (FR)
(72) Inventeur: Poirot-Crouvezier, Jean-Philippe, 38450, SAINT-GEORGES DE COMMIERS (FR); Manicardi, Philippe, 38600, FONTAINE (FR); Montaut, Audrey, 38100, GRENOBLE (FR); Oriol, Jean, 38000, GRENOBLE (FR)
(74) Mandataire: Ilgart, Jean-Christophe

(56) Documents cités:
- JP-A- 10 214 634
- US-A1- 2003 198 853
- US-A1- 2005 202 304
- US-A1- 2005 255 342

## Description

### DOMAINE TECHNIQUE ET ART ANTERIEUR

La présente invention se rapporte principalement à une pile à combustible plane, et plus particulièrement aux piles à combustible fonctionnant à basse température et utilisant une membrane comme électrolyte.

Il existe deux types de réalisation de pile à combustible :

Les piles à combustible selon le premier type sont constituées d'un empilement de cellules élémentaires.

Une cellule élémentaire comporte un électrolyte et deux électrodes de part et d'autre, une électrode remplissant la fonction d'anode où a lieu une réaction d'oxydation, et une électrode remplissant la fonction d'une cathode où a lieu une réaction de réduction.

Dans le cas d'un empilement de cellules, des conducteurs électroniques, type plaque bipolaire, sont interposés entre la cathode d'une cellule et l'anode d'une cellule suivante.

En outre, des moyens d'alimentation en continu de réactifs sont prévus au niveau de l'anode et de la cathode.

Dans ce premier type de pile, une étanchéité latérale et une étanchéité au niveau des extrémités de l'empilement doivent être prévues. Ces étanchéités sont notamment obtenues par application d'une force de serrage permanente dans le sens de l'empilement par un système vis-écrou. En outre, il est nécessaire de prévoir une alimentation en réactifs individuelle pour chaque anode et chaque cathode.

Les piles à combustible du deuxième type sont planes, des exemples de telles piles sont décrits dans les documents FR 1 452 564 et US 5 925477.

Ces piles comportent une pluralité de cellules élémentaires se chevauchant partiellement et reliées électriquement. Ces cellules élémentaires forment une « nappe de cellules », dont un côté est recouvert de cathodes et un autre côté est recouvert d'anodes. L'alimentation en réactifs est alors simplifiée puisque qu'il suffit d'un conduit pour amener le réactif au niveau de la face formée d'anodes et un conduit pour amener le réactif au niveau de la face formée de cathodes.

Le problème majeur dans la fabrication d'une telle pile est la réalisation de l'étanchéité aux réactifs, notamment aux gaz, par exemple l'oxygène et l'hydrogène dans le cas d'une pile à hydrogène. L'étanchéité est obtenue par de nombreux collages et serrages, comme pour les piles de type à empilement de cellules élémentaires.

Une telle pile comporte alors deux plaques de part et d'autre de la cellule, des joints entre les faces de la cellule et les plaques, et des moyens de serrage, type vis-écrou reliant les deux plaques.

Ce deuxième type de pile présente l'avantage d'offrir un encombrement et une masse réduits par rapport à l'empilement de cellules élémentaires, du fait de la suppression des plaques bipolaires. Cependant, les plaques nécessitant une épaisseur et une largeur plus grandes pour permettre cet assemblage par systèmes vis-écrou, ce type de pile ne peut être utilisé que pour des applications requérant de faibles puissances, puisqu'il n'est pas aisé d'associer de la sorte sur un même plan plusieurs dizaines de cellules élémentaires.

En outre, ce deuxième type de pile offre des performances réduites par rapport au premier type de piles, notamment du fait de la connexion entre les cellules élémentaires se chevauchant.

Enfin, le remplacement d'une des cellules n'est pas aisé, puisqu'il faut prévoir de rompre l'étanchéité de toutes les cellules et de séparer mécaniquement deux cellules. Le document US 2003/198853 décrit également une pile du deuxième type, dans lequel l'accès à une cellule impose de rompre l'étanchéité de toutes les cellules.

Le document US2003/198853 décrit une pile à combustible comportant une série de cellules juxtaposées dans un plan, et inséré dans un boîtier. Le boîtier est ouvert à l'air libre. La pile comporte deux plans de cellules et possède entre ces deux plans un espace permettant l'approvisionnement en combustible.

C'est par conséquent un but de la présente invention d'offrir une pile à combustible plane, de structure compacte et de réalisation simple.

C'est également un but de la présente invention d'offrir une pile à combustible plane dont la structure est adaptée pour offrir une puissance suffisante.

### EXPOSE DE L'INVENTION

Les buts précédemment énoncés sont atteints par une pile plane comportant au moins une cellule élémentaire montée dans un boitier et des moyens coopérant directement avec le boîtier pour comprimer un joint interposé entre le boîtier et la cellule.

En d'autres termes, la compression du joint est obtenue par coopération d'une partie mâle et d'une partie femelle, portées par le couvercle et le boîtier sans requérir d'élément supplémentaire.

Le montage est donc plus simple. Par ailleurs, dans le cas où la pile plane comporte plusieurs cellules, une intervention individuelle sur chaque cellule est aisée et ne détériore pas les autres cellules.

La masse et l'encombrement sont réduits, puisque les pièces participant à l'étanchéité peuvent être moins rigides et moins grandes, la quantité de matière peut alors est réduite. Le prix de revient en est également diminué.

En outre, la pile plane selon la présente invention peut offrir une puissance importante, puisque le nombre de cellules élémentaires associées peut être très grand.

La pile à combustible plane selon la présente invention comporte au moins une cellule élémentaire, un support de ladite cellule offrant une surface d'appui à une périphérie de la cellule élémentaire, des moyens d'étanchéité interposés entre la périphérie de la cellule et la surface du support, et un élément de compression venant en appui sur la périphérie de la cellule à l'opposé des moyens d'étanchéité et coopérant directement avec le support pour assurer une compression des moyens d'étanchéité.

On entend par coopération directe entre le support et l'élément de compression, une interaction directe par contact entre un élément faisant partie de l'élément de compression et un élément faisant partie du support.

La présente invention a alors principalement pour objet une pile à combustible plane comportant au moins deux cellules élémentaires juxtaposées dans un plan, un boîtier muni de supports pour chaque cellule élémentaire, chaque support offrant une surface d'appui à une périphérie d'une cellule élémentaire, ladite pile comportant également des moyens d'étanchéité interposés entre la périphérie de chaque cellule et la surface de son support, et un élément de compression, associé à chaque support, venant en appui sur la périphérie de la cellule à l'opposé des moyens d'étanchéité et coopérant directement avec le support associé pour assurer une compression des moyens d'étanchéité, ledit boîtier délimitant une chambre d'alimentation en réactif, une première électrode de chacune des cellules élémentaires étant en contact avec le volume intérieur de la chambre d'alimentation, une deuxième électrode de chaque cellule élémentaire étant orientée vers l'extérieur du boîtier, ladite compression des moyens d'étanchéité assurant l'étanchéité de la chambre d'alimentation vis-à-vis de l'extérieur du boîtier.

Dans exemple de réalisation, chaque élément de compression coopère avec ledit support associé par encliquetage.

Chaque élément de compression peut pénétrer à l'intérieur dudit support associé, ledit support comportant un épaulement formant la surface d'appui sur laquelle repose la périphérie de la cellule élémentaire et une saillie, et l'élément de compression comportant un évidement recevant la saillie.

Dans une variante de réalisation, chaque support pénètre à l'intérieur dudit élément de compression associé, les moyens d'étanchéité reposant sur une extrémité axiale du support formant la surface d'appui, ledit support comportant un évidement, et ledit élément de compression comportant un épaulement s'appliquant sur les moyens d'étanchéité et au moins une saillie pénétrant dans l'évidement. La saillie est, par exemple une nervure annulaire et l'évidement est une rainure annulaire.

Dans un autre exemple de réalisation, chaque cellule élémentaire peut être de forme circulaire, chaque support ayant une section transversale circulaire et chaque élément de compression a également une section transversale circulaire, chaque élément de compression coopérant avec le support associé par vissage.

Chaque élément de compression peut alors pénétrer à l'intérieur dudit support associé, ledit support comportant un épaulement formant la surface d'appui, sur lequel repose la périphérie de la cellule élémentaire et un pas de vis, et l'élément de compression comportant un pas de vis coopérant avec le pas de vis du support.

Dans une variante de réalisation, chaque support pénètre à l'intérieur du dudit élément de compression associé, les moyens d'étanchéité reposant sur une extrémité axiale du support formant la surface d'appui, le support comportant un pas de vis, et l'élément de compression comportant un épaulement s'appliquant sur les moyens d'étanchéité et un pas de vis coopérant avec le pas de vis du support.

Les pas de vis sont par exemple, formés par des inserts.

La périphérie de la cellule élémentaire disposée entre les moyens d'étanchéité et le moyen de compression est, avantageusement une périphérie d'un électrolyte sous forme de membrane

Chaque élément de compression peut comporter un fond pour former un couvercle.

Ledit fond peut, dans un exemple de réalisation, comporter des orifices pour l'alimentation en réactifs de la deuxième électrode.

La pile à combustible peut comporter des conducteurs électriques en forme de grille recouvrant des électrodes de chaque cellule élémentaire et reliées par des connecteurs électriques à un circuit électrique.

Les cellules élémentaires peuvent être reliées électriquement en série.

On peut prévoir que les cellules élémentaires sont de tailles différentes et sont reliées en parallèle.

Dans un mode de réalisation, la pile comporte au moins deux premières cellules élémentaires juxtaposées dans un premier plan, au moins deux deuxièmes cellules élémentaires juxtaposés dans un deuxième plan, chaque cellule élémentaire parmi les premières cellules élémentaires étant disposée en vis-à-vis d'une deuxième cellule élémentaire, et un moyen élastique monté en compression en appui contre lesdites cellules élémentaires.

La pile peut comporter une source d'hydrogène reliée à la chambre d'alimentation, les premières électrodes formant des anodes et les deuxièmes électrodes formant des cathodes, l'oxygène provenant de l'air ambiant empruntant les orifices des capots

### BRÈVE DESCRIPTION DES DESSINS

La présente invention sera mieux comprise à l'aide de la description qui va suivre et des dessins en annexe sur lesquels :
- la figure 1 est une vue en coupe longitudinale d'un pile selon la présente invention représentée de manière schématique,
- la figure 2A est une vue de détail de la figure 1 dans un premier exemple de réalisation,
- la figure 2B est une vue de détail de la figure 1 dans un deuxième exemple de réalisation,
- les figures 3A et 3B sont des vues de détail de deux exemples d'un deuxième mode de réalisation d'une pile selon la présente invention,
- la figure 4 est une vue en coupe d'une variante de réalisation d'une pile selon la présente invention,
- la figure 5 est une vue de dessus d'une pile selon la présente invention à densité de cellules élémentaires augmentée.

### EXPOSÉ DÉTAILLÉ DE MODES DE RÉALISATION PARTICULIERS

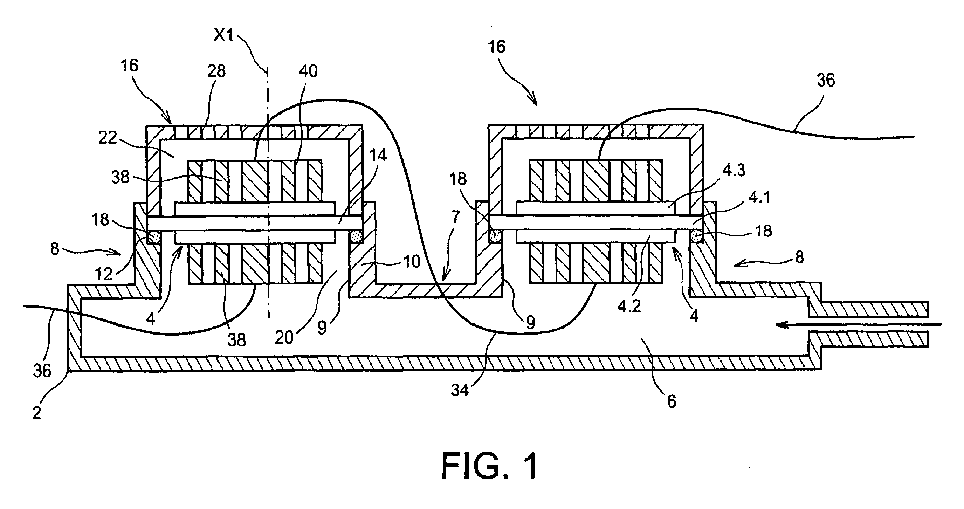

Sur la figure 1, on peut voir un premier mode de réalisation d'une pile selon la présente invention, comportant un boîtier 2 et deux cellules élémentaires 4.

Une cellule élémentaire 4 comporte de manière générale un électrolyte 4.1, par exemple sous forme de membrane et des électrodes 4.2, 4.3 fixés sur l'électrolyte 4.1, de part et d'autre de celui-ci.

La pile selon la présente invention comporte une pluralité de cellules disposées selon un assemblage plan. Les cellules sont juxtaposées dans un même plan.

Dans l'exemple représenté, la pile comporte deux cellules élémentaires 4, mais il est bien entendu qu'une pile comportant plus de deux cellules élémentaires 4 ne sort pas du cadre de la présente invention.

Le boîtier 2 comporte une chambre de d'alimentation 6 délimitée au niveau de sa partie supérieure par une paroi 7 munie sur sa face extérieure de logements 8 pour recevoir les cellules élémentaires 4.

Selon la présente invention, chaque cellule élémentaire 4 est reçue dans un logement individuel d'axe longitudinal X1.

Un orifice 9 est réalisé dans la paroi 7 au droit de chaque logement 8.

Dans la suite de la description, les cellules considérées ont une forme circulaire, il sera précisé quand les cellules ont une autre forme.

Les logements 8 sont formés chacun par un support tubulaire 10 et un épaulement 12 annulaire réalisé sur la face interne du support tubulaire 10. Les supports tubulaires sont en saillie de la face extérieure de la paroi 7.

Les cellules reposent au niveau de leur périphérie radialement extérieure 14 sur l'épaulement 12. Ainsi les cellules sont suspendues, une électrode 4.2 orientée du côté de la chambre d'alimentation 6 et une électrode 4.3 vers l'extérieur du boîtier.

Les logements 8 sont donc divisés par la cellule élémentaire 4 en une chambre 20 pour l'électrode 4.2 et une chambre 22 pour l'électrode 4.3.

Dans l'exemple représenté, l'électrolyte 4.1 présente un diamètre plus grand que celui des électrodes 4.2, 4.3. Ainsi la cellule élémentaire est suspendue par l'intermédiaire de la périphérie radialement extérieure de l'électrolyte 4.1. Cependant, on peut prévoir que l'électrolyte 4.1 et l'électrode 4.3, i.e. l'électrode se situant de l'autre côté du joint par rapport à la zone alimentée en hydrogène, aient le même diamètre.

Selon la présente invention, il est prévu d'assurer individuellement l'étanchéité au niveau de chaque cellule élémentaire, au lieu de réaliser une étanchéité unique pour l'ensemble des cellules élémentaires.

Un capot 16 est également prévu pour chaque logement 8 recouvrant la cellule et coopérant avec le support tubulaire 10.

Chaque logement 8 comporte des moyens d'étanchéité 18 destinés à isoler de manière étanche aux gaz la chambre 20 et la chambre 22 l'une de l'autre.

Dans l'exemple représenté, les moyens d'étanchéité 18 représentés sont formés par un joint plat interposé entre l'épaulement 12 et la périphérie radialement extérieure de l'électrolyte 4.1. Mais on pourrait également prévoir un joint torique, un joint à lèvre out tout autre joint.

Selon la présente invention, l'étanchéité est assurée par compression du joint plat, cette compression étant obtenue par coopération entre le capot 16 et le logement 8, plus particulièrement entre le capot 16 et le support tubulaire 10. Un seul joint suffit, et celui-ci ne subit pas de frottement du capot.

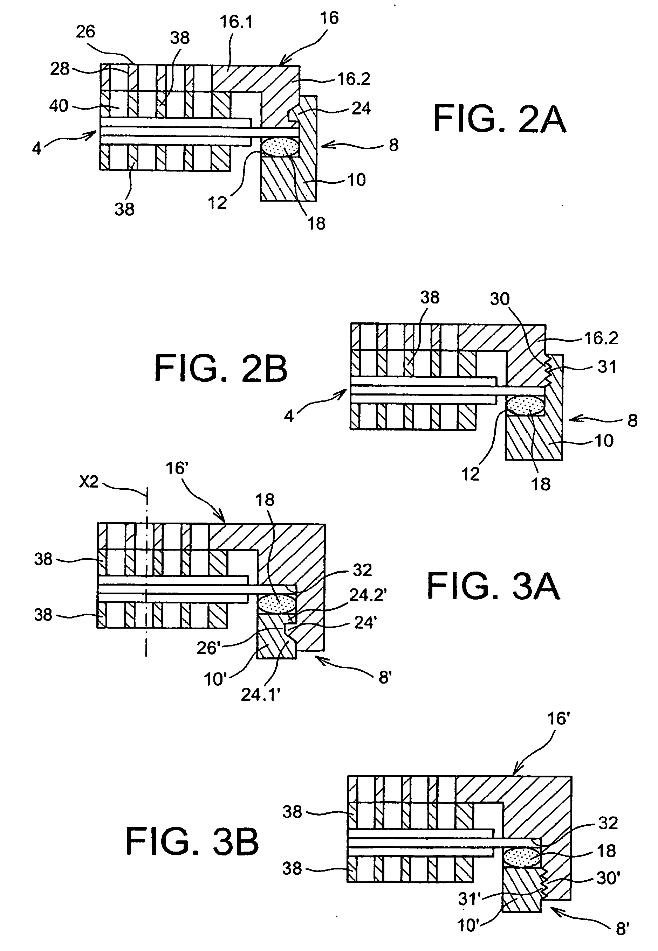

Sur la figure 2A, on peut voir un exemple de réalisation de cette coopération. La solidarisation du capot 16 sur le support tubulaire 10 est obtenue par encliquetage. A cet effet, la surface intérieure du support tubulaire 10 comporte une saillie 24 annulaire radialement vers l'intérieur ; et le capot formé par un fond 16.1 et une paroi 16.2 cylindrique de diamètre extérieur sensiblement égale au diamètre intérieur du support tubulaire 10 comporte une rainure annulaire 26 recevant la saillie annulaire 24.

La rainure 26 est prévue à une distance de l'extrémité axiale de la paroi cylindrique 16.2, telle que lorsque la saillie 24 est en place dans la rainure 26, le joint plat 18 est comprimé, assurant l'étanchéité entre l'électrolyte et l'épaulement.

La saillie annulaire 24 comporte avantageusement, du côté de l'extrémité ouverture du logement 8, une face inclinée en direction de l'axe X du logement facilitant la mise en place du capot 16.

Le capot est réalisé en un matériau tel qu'il se déforme élastiquement lors de sa mise en place et tel qu'il offre une rigidité suffisante pour assurer une compression permanente du joint 18. Le matériau choisi pour le capot peut appartenir, par exemple à la famille des polypropylènes, à la famille des polybutylènes ou à celle des polyéthylènes.

La rainure 26 comporte un profil correspondant au profil de la saillie annulaire 24.

Dans l'exemple représenté, le fond 16.1 du capot 16 comporte des orifices 28 pour l'alimentation en gaz.

Sur la figure 2B, on peut voir un autre exemple de réalisation de la coopération entre le capot 16 et le logement 8. Dans cet exemple, le capot 16 et le logement 8 coopèrent par vissage. Pour cela, la face extérieure de la paroi cylindrique 16.2 comporte un pas de vis 30 et la face intérieure du support tubulaire 10 comporte également un pas de vis 31 correspondant. Le vissage du capot dans le support tubulaire 10 provoque la compression du joint 18.

Sur les figures 3A et 3B, on peut voir un deuxième mode de réalisation d'une pile selon la présente invention, dans lequel la coopération entre la capot et le support tubulaire s'effectue par l'extérieur, le capot recouvrant le support tubulaire.

Pour cela, la cellule élémentaire 4, en particulier l'électrolyte 4.1 dans l'exemple représenté repose sur l'extrémité libre du support tubulaire 10', et non plus sur un épaulement, la réalisation du logement 8' est donc simplifiée.

Par contre, le capot 16' comporte une partie de plus grand diamètre intérieur et une partie du petit diamètre intérieur délimitant ainsi un épaulement 32 venant en appui sur la périphérie radialement extérieure de l'électrolyte 4.1. Une rainure 26' est prévue dans la face extérieure du support tubulaire 10' et une nervure annulaire 24' est prévue en saillie de la face intérieure de la paroi du capot 16'.

La nervure 24' comporte une face transversale inclinée 24.1' en direction de l'axe longitudinal X2 de la paroi cylindrique 16 pour faciliter l'insertion du capot et une face orthogonale 24.2' à l'axe X2 formant un moyen de retenu.

La distance entre l'épaulement 32 et la face transversale 24.2' est telle que l'épaulement 32 comprime effectivement le joint 18.

Sur la figure 3B, le capot comporte également un épaulement 32 ; un pas de vis 31' est réalisé sur la face extérieure du boîtier 10 et un pas de vis 30' est prévu dans la face intérieure du capot 16.

La longueur des pas de vis est également choisie pour assurer la compression du joint 18.

On pourrait également prévoir d'intervertir la rainure et la nervure en saillie, par exemple sur la figure 2A, la saillie pourrait être réalisée sur le capot et la rainure dans le support tubulaire.

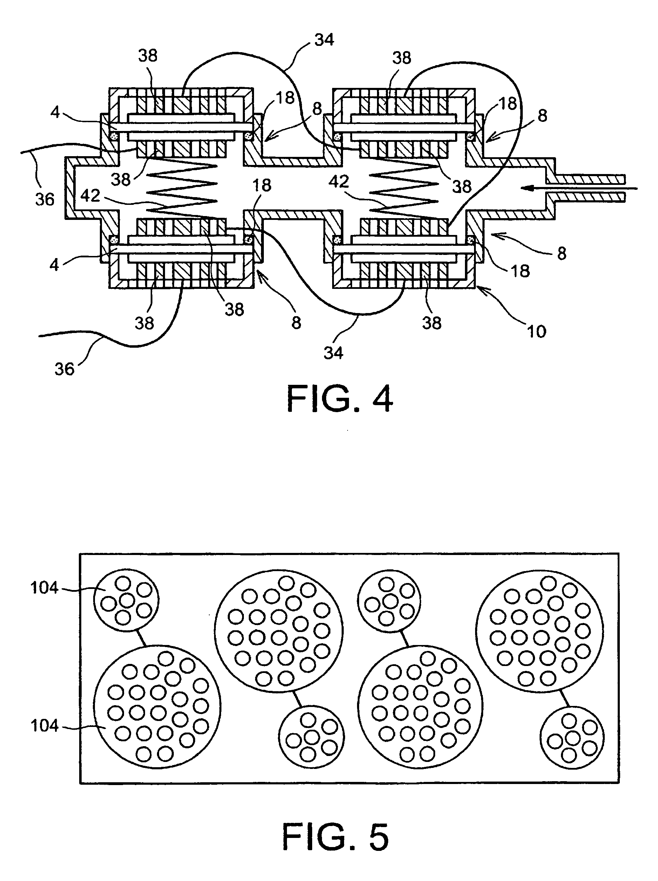

Les cellules élémentaires sont reliées en série, comme cela est schématisé sur la figure 4.

Pour cela, il est prévu des conducteurs électroniques 38 recouvrant les électrodes et laissant passer les réactifs pour que ceux-ci puissent venir en contact avec les électrodes. Ces conducteurs électroniques sont par exemple formés par des grilles ou des feuilles perforées. Les grilles comportent donc des orifices 40.

Ces conducteurs sont avantageusement réalisés en matériau métallique.

On peut prévoir que la grille 38 disposée sur l'électrode 4.2, i.e. dans la chambre d'alimentation 8, soit en appui sur l'épaulement ou sur l'extrémité de support. D'autres types de maintien sont bien entendu envisageables.

La grille 38 du côté de l'électrode 4.3 est avantageusement maintenue serrée entre l'électrode 4.3 et le capot 16. Dans ce cas, les orifices 28 du capot 16 et ceux 40 des plaques collectrices 38 sont avantageusement alignés.

Des connexions électriques 34 relient les cellules entre elles, dans l'exemple représenté un connecteur relie l'électrode 4.3 d'une cellule élémentaire à une électrode 4.2 d'une cellule élémentaire suivante, l'une formant anode et l'autre formant cathode, les connexions 36 relient donc les conducteurs électroniques 38 entre eux. Des connexions électriques 36 relient les cellules à un circuit électrique extérieur.

Les connecteurs 34, 36 sont acheminés entre les cellules élémentaires de manière à réduire la complexité des étanchéités à réaliser.

Par exemple, la chambre d'alimentation 6 est reliée à une source d'hydrogène gazeux (non représentée); les électrodes 4.2 formant des anodes, et les électrodes 4.3 formant des cathodes, la chambre 20 est alimentée en oxygène traversant les orifices 28 prévus dans le capot.

Les réactions suivantes ont lieu à l'anode et à la cathode respectivement :

H₂ → 2H⁺ + 2e⁻

O₂ + 4H⁺ + 4e⁻ → 2H₂O

L'oxygène peut être fourni directement par l'air ambiant, ainsi les orifices du capot peuvent directement être en contact avec l'environnement extérieur. Dan ce cas, le capot joue un rôle de protection de la cathode, aucune étanchéité n'est nécessaire entre le capot et la cellule. On pourrait alors prévoir de remplacer le capot par une simple bague annulaire coopérant avec le boîtier et un capot de protection commun à toutes les cellules, qui n'assure pas de rôle dans l'étanchéité. Dans les cas où la cathode ne risque pas d'être endommagée, il est possible de ne prévoir aucun capot.

La présente invention permet d'appliquer de manière simple un effort sensiblement continu sur toute la périphérie de la cellule élémentaire pour assurer l'étanchéité au gaz entre la chambre anodique et la chambre cathodique, ceci permet de réduire la masse et le volume d'une pile par rapport à une pile de l'état de la technique, dans laquelle une pluralité de vis est utilisée pour appliquer un effort de serrage sur toute la périphérie de la pile. Le capot selon l'invention peut être réalisé avec une largeur et une épaisseur inférieures à celle des plaques requises dans les piles planes de l'état de la technique.

Dans le cas d'une coopération par encliquetage, on peut envisager de réaliser des cellules élémentaires ayant toute forme, et non uniquement circulaire.

En outre dans les exemples décrits, l'encliquetage est réalisé au moyen d'une couronne annulaire pénétrant dans une rainure annulaire, mais on peut prévoir des doigts pénétrant dans une rainure annulaire commune, ou pénétrant individuellement dans des logements individuels.

Dans le cas d'une coopération par vissage, on pourrait également envisager des moyens de liaison de type à baïonnette.

Le boîtier est par exemple réalisé en matériau polymère, des inserts notamment les pas de vis peuvent être prévus, assurant un renfort mécanique.

Le boîtier peut être réalisé d'une seule pièce ou à partir des plusieurs éléments collés ou soudés à chaud, évitant de recourir à des joints d'étanchéité.

Sur la figure 4, on peut voir une variante de réalisation d'une pile selon la présente invention, comportant des cellules élémentaires dans une paroi inférieure et dans une paroi supérieure, la chambre d'alimentation étant bordée sur son fond et son plafond de cellules élémentaires 4. Des cellules sont juxtaposées dans un premier plan, et des cellules sont juxtaposées dans un deuxième plan.

De manière avantageuse, des paires de cellules élémentaires sont disposées en vis-à-vis, les grilles de collecte 38 de chaque électrode disposée dans la chambre d'alimentation peuvent alors être en appui l'une contre l'autre en prévoyant une isolation électrique entre elles.

Comme cela est représenté, on peut également interposer un ressort 42 monté en compression entre les deux cellules en vis-à-vis. Le ressort est maintenu comprimé grâce à la coopération des capots avec les boîtiers. Dans le cas où le ressort est en matériau conducteur électrique, des moyens d'isolation électrique (non représentés) peuvent également être prévus entre les deux cathodes.

On pourrait envisager ce type de maintien pour la grille 38 dans le cas du mode de réalisation de la figure 1.

Sur la figure 5, on peut voir un exemple de répartition de cellules 104 de forme circulaire sur un support rectangle. On peut prévoir, afin de maximiser la densité de cellules, de réaliser plusieurs sous-cellules circulaires reliées en parallèle au lieu d'une, afin de pouvoir mieux utiliser la surface disponible. Dans l'exemple représenté, une pluralité de paires de sous-cellules a été réalisée.

Ce montage en parallèle permet de réaliser des cellules de même surface, et donc de garder la même densité de courant (en A/cm²) dans toutes les cellules.

La présente invention présente également l'avantage d'être démontable facilement et de pouvoir accéder individuellement à chaque cellule afin de pouvoir en réparer une si nécessaire.

Il est également envisageable grâce à la présente invention de réaliser l'étanchéité sur la périphérie d'une nappe de cellules d'une pile de l'état de la technique.

## Revendications

1. Pile à combustible plane comportant au moins deux cellules élémentaires (4) juxtaposées dans un plan, un boîtier muni de supports (10, 10') pour chaque cellule élémentaire (4), chaque support (10, 10') offrant une surface d'appui à une périphérie d'une cellule élémentaire (4), ladite pile comportant également des moyens d'étanchéité (18) interposés entre la périphérie de chaque cellule (4) et la surface de son support (10, 10'), et un élément de compression (16, 16'), associé à chaque support, venant en appui sur la périphérie de la cellule (4) à l'opposé des moyens d'étanchéité (18) et coopérant directement avec le support associé (10, 10') pour assurer une compression des moyens d'étanchéité (18), ledit boîtier délimitant une chambre d'alimentation (6) en réactif, une première électrode (4.2) de chacune des cellules élémentaires étant en contact avec le volume intérieur de la chambre d'alimentation, une deuxième électrode (4.3) de chaque cellule élémentaire étant orientée vers l'extérieur du boîtier, la première électrode et la deuxième électrode étant de polarités opposées, ladite compression des moyens d'étanchéité assurant l'étanchéité de la chambre d'alimentation vis-à-vis de l'extérieur du boîtier.

2. Pile à combustible selon la revendication 1, dans laquelle chaque élément de compression (16, 16') coopère avec ledit support associé (10, 10') par encliquetage.

3. Pile à combustible selon la revendication 2, dans laquelle chaque élément de compression (16) pénètre à l'intérieur dudit support associé (10), ledit support (10) comportant un épaulement (12) formant la surface d'appui sur laquelle repose la périphérie de la cellule élémentaire (4) et une saillie (24), et l'élément de compression (16) comportant un évidement (26) recevant la saillie.

4. Pile à combustible selon la revendication 2, dans laquelle chaque support (10') pénètre à l'intérieur dudit élément de compression associé (16'), les moyens d'étanchéité (18) reposant sur une extrémité axiale du support (10') formant la surface d'appui, ledit support (10') comportant un évidement (26'), et ledit élément de compression (16') comportant un épaulement (32) s'appliquant sur les moyens d'étanchéité (18) et au moins une saillie (24') pénétrant dans l'évidement (26').

5. Pile à combustible selon la revendication 3 ou 4, dans laquelle la saillie (24, 24') est une nervure annulaire et l'évidement (26, 26') est une rainure annulaire.

6. Pile à combustible selon la revendication 1, dans laquelle chaque cellule élémentaire (4) a une forme circulaire, chaque support (10, 10') a une section transversale circulaire et chaque élément de compression (16, 16') a également une section transversale circulaire, chaque élément de compression (16, 16') coopérant avec le support associé (10, 10') par vissage.

7. Pile à combustible selon la revendication 6, dans laquelle chaque élément de compression (16) pénètre à l'intérieur dudit support associé (10), ledit support (10) comportant un épaulement (12) formant la surface d'appui, sur lequel repose la périphérie de la cellule élémentaire (4) et un pas de vis (31), et l'élément de compression (16) comportant un pas de vis (31) coopérant avec le pas de vis (30) du support (10).

8. Pile à combustible selon la revendication 6, dans laquelle chaque support (10') pénètre à l'intérieur du dudit élément de compression associé (16'), les moyens d'étanchéité (18) reposant sur une extrémité axiale du support formant la surface d'appui, le support (10') comportant un pas de vis (31'), est l'élément de compression (16') comportant un épaulement (32) s'appliquant sur les moyens d'étanchéité (18) et un pas de vis (30') coopérant avec le pas de vis (31') du support (10').

9. Pile à combustible selon l'une des revendications 1 à 8, dans laquelle la périphérie de la cellule élémentaire (4) disposée entre les moyens d'étanchéité (18) et le moyen de compression (16, 16') est une périphérie d'un électrolyte (4.1) sous forme de membrane

10. Pile à combustible selon l'une des revendications 6 à 8, dans laquelle les pas de vis (30, 31, 30', 31') sont formés par des inserts.

11. Pile à combustible selon l'une des revendications 1 à 10, dans laquelle chaque élément de compression (16, 16') comporte un fond (16.1) pour former un couvercle.

12. Pile à combustible selon la revendication 11, dans laquelle ledit fond (16.1) comporte des orifices (28) pour l'alimentation en réactifs de la deuxième électrode (4.3).

13. Pile à combustible selon l'une des revendications 1 à 12, comportant des conducteurs électriques (38) en forme de grille recouvrant des électrodes de chaque cellule élémentaire (4) et reliées par des connecteurs électriques (34, 36) à un circuit électrique.

14. Pile à combustible selon l'une des revendications 1 à 13, dans lequel les cellules élémentaires (4) sont reliées électriquement en série.

15. Pile à combustible selon l'une des revendications 1 à 14, dans lequel les cellules élémentaires (104) sont de tailles différentes et sont reliées en parallèle.

16. Pile à combustible selon l'une des revendications 1 à 15, comportant au moins deux premières cellules élémentaires juxtaposées dans un premier plan, au moins deux deuxièmes cellules élémentaires juxtaposés dans un deuxième plan, chaque cellule élémentaire parmi les premières cellules élémentaires étant disposée en vis-à-vis d'une deuxième cellule élémentaire, et un moyen élastique (42) monté en compression en appui contre lesdites cellules élémentaires(4).

17. Pile à combustible selon l'une des revendications 1 à 16 en combinaison avec la revendication 12, comportant une source d'hydrogène reliée à la chambre d'alimentation (6), les premières électrodes (4.2) formant des anodes et les deuxièmes électrodes (4.3) formant des cathodes, l'oxygène provenant de l'air ambiant empruntant les orifices des couvercles.

## Claims

1. Flat fuel cell comprising at least two unit cells (4) juxtaposed in one plane, a casing provided with supports (10, 10') for each unit cell (4), each support (10, 10') offering a bearing surface at a periphery of an unit cell (4), said fuel cell also comprising stealing means (18) interposed between the periphery of each unit cell (4) and the surface of its support (10, 10'), and a compression element (16, 16'), associated with each support, coming into abutment on the periphery of the unit cell (4) opposite to the sealing means (18) and cooperating directly with the associated support (10, 10') in order to provide compression of the sealing means (18), the said casing delimiting a reactant supply chamber (6), a first electrode (4.2) of each of the unit cells being in contact with the interval volume of the supply chamber, a second electrode (4.3) of each unit cell being oriented towards the outside of the casing, the first electrode and the second electrode having opposite polarities said compression of the sealing means providing a seal for the supply chamber vis-à-vis the outside of the casing.

2. Fuel cell according to claim 1, wherein each compression element (16, 16') cooperates with said associated support (10, 10') by snapping on.

3. Fuel cell according to claim 2, wherein each compression element (16) enters inside said associated support (10), said support (10) comprising a shoulder (12) forming the support surface on which there rests the periphery of the unit cell (4) and a projection (24), and the compression element (16) comprising a recess (26) receiving the projection.

4. Fuel cell according to claim 2, wherein each support (10') enters inside said associated compression element (16'), the sealing means (18) resting on an axial end of the support (10') forming the bearing surface, said support (10') comprising a recess (26'), and said compression element (16') comprising a shoulder (32) applied against the sealing means (18) and at least one projection (24') entering the recess (26').

5. Fuel cell according to claim 3 or 4, wherein the projection (24, 24') is an annular rib and the recess (26, 26') is an annular groove.

6. Fuel cell according to claim 1, wherein each unit cell (4) has a circular shape, each support (10, 10') has a circular transverse section and each compression element (16, 16') also has a circular transverse section, each compression element (16, 16') cooperating with the associated support (10, 10') by screwing.

7. Fuel cell according to claim 6, wherein each compression element (16) enters inside said associated support (10), said support (10) comprising a shoulder (12) forming the support surface, on which there rests the periphery of the unit cell (4) and a screw thread (31), and the compression element (16) comprising a screw thread (31) cooperating with the screw thread (30) on the support (10).

8. Fuel cell according to claim 6, wherein each support (10') enters inside said associated compression element (16'), the sealing means (18) resting on an axial end of the support forming the support surface, the support (10') comprising a screw thread (31'), and the compression element (16') comprising a shoulder (32) applied to the sealing means (18) and a screw thread (30') cooperating with the screw thread (31') on the support (10').

9. Fuel cell according to one of claims 1 to 8, wherein the periphery of the unit cell (4) disposed between the sealing means (18) and the compression means (16, 16') is a periphery of an electrolyte (4.1) in the form of a membrane.

10. Fuel cell according to one of claims 6 to 8, wherein the screw threads (30, 31, 30', 31') are formed by inserts.

11. Fuel cell according to one of claims 1 to 10, wherein each compression element (16, 16') comprises a bottom (16.1) for forming a cover.

12. Fuel cell according to claim 11, wherein said bottom (16.1) comprises orifices (28) for supplying reactants to the second electrode (4.3).

13. Fuel cell according to one of claims 1 to 12, comprising electrical conductors (38) in the form of a grille covering electrodes of each unit cell (4) and connected by electrical connectors (34, 36) to an electrical circuit.

14. Fuel cell according to one of claims 1 to 13, wherein the unit cells (4) are electrically connected in series.

15. Fuel cell according to one of claims 1 to 14, wherein the unit cells (104) are of different sizes and are connected in parallel.

16. Fuel cell according to one of claims 1 to 15, comprising at least two first unit cells juxtaposed in a first plane, at least two second unit cells juxtaposed in a second plane, each unit cell among the first unit cells being disposed opposite a second unit cell, and an elastic means (42) mounted under compression in abutment against the said unit cells (4).

17. Fuel cell according to one of claims 1 to 16 in combination with claim 12, comprising a source of hydrogen connected to the supply chamber (6), the first electrodes (4.2) forming anodes and the second electrodes (4.3) forming cathodes, the oxygen coming from the ambient air following the orifices in the covers.

## Patentansprüche

1. Flache Brennstoffzelle, umfassend mindestens zwei Elementarzellen (4), die in einer Ebene nebeneinander angeordnet sind, ein Gehäuse, das mit Stützen (10, 10') für jede Elementarzelle (4) versehen ist, wobei jede Stütze (10, 10') eine Stützfläche für eine Peripherie einer Elementarzelle (4) bietet, wobei die Brennstoffzelle auch Dichtungsmittel (18), die zwischen der Peripherie jeder Zelle (4) und der Fläche ihrer Stütze (10, 10') angeordnet sind, und ein Kompressionselement (16, 16') umfasst, das jeder Stütze zugeordnet ist und an der Peripherie der Zelle (4) gegenüber den Dichtungsmitteln (18) zur Anlage gelangt und direkt mit der zugehörigen Stütze (10, 10') zusammenwirkt, um eine Kompression der Dichtungsmittel (18) zu gewährleisten, wobei das Gehäuse eine Reagenszuführkammer (6) begrenzt, wobei eine erste Elektrode (4.2) jeder der Elementarzellen mit dem Innenvolumen der Zuführkammer in Kontakt ist, wobei eine zweite Elektrode (4.3) jeder Elementarzelle zum Äußeren des Gehäuses gerichtet ist, wobei die erste Elektrode und die zweite Elektrode entgegen gesetzte Polaritäten aufweisen, wobei die Kompression der Dichtungsmittel die Abdichtung der Zuführkammer zum Äußeren des Gehäuses gewährleistet.

2. Brennstoffzelle nach Anspruch 1, bei der jedes Kompressionselement (16, 16') mit der zugehörigen Stütze (10, 10') durch Einrasten zusammenwirkt.

3. Brennstoffzelle nach Anspruch 2, bei der jedes Kompressionselement (16) in das Innere der zugehörigen Stütze (10) einbringt, wobei die Stütze (10) einen Absatz (12), der die Stützfläche bildet, auf der die Peripherie der Elementarzelle (4) aufliegt, und einen Vorsprung (24) umfasst, und wobei das Kompressionselement (16) eine Aussparung (26) umfasst, die den Vorsprung aufnimmt.

4. Brennstoffzelle nach Anspruch 2, bei der jede Stütze (10') in das innere des zugehörigen Kompressionselements (16') eindringt, wobei die Dichtungsmittel (18) auf einem Axialende der Stütze (10'), das die Stützfläche bildet, aufliegen, wobei die Stütze (10') eine Aussparung (26') umfasst, und wobei das Kompressionselement (16') einen Absatz (32), der sich an die Dichtungsmittel (18) anlegt, und mindestens einen Vorsprung (24') umfasst, der in die Aussparung (26') einbringt.

5. Brennstoffzelle nach Anspruch 3 oder 4, bei der der Vorsprung (24, 24') eine ringförmige Rippe und die Aussparung (26, 26') eine ringförmige Nut ist.

6. Brennstoffzelle nach Anspruch 1, bei der jede Elementarzelle (4) eine kreisförmige Ausführung aufweist, jede Stütze (10, 10') einen kreisförmigen Querschnitt hat und jedes Kompressionselement (16, 16') ebenfalls einen kreisförmigen Querschnitt aufweist, wobei jedes Kompressionselement (16, 16') mit der zugehörigen Stütze (10, 10') durch Schrauben zusammenwirkt.

7. Brennstoffzelle nach Anspruch 6, bei der jedes Kompressionselement (16) in das Inner der zugehörigen Stütze (10) eindringt, wobei die Stütze (10) einen Absatz (12), der die Stützfläche bildet, auf der die Peripherie der Elementarzelle (4) aufliegt, und einen Schraubengang (31) aufweist, und wobei das Kompressionselement (16) einen Schraubengang (31) aufweist, der mit dem Schraubengang (30) der Stütze (10) zusammenwirkt.

8. Brennstoffzelle nach Anspruch 6, bei der jede Stütze (10') in das Innere des zugehörigen Kompressionselements (16') eindringt, wobei die Dichtungsmittel (18) auf einem Axialende der Stütze, das die Stützfläche bildet, aufliegt, wobei die Stütze (10') einen Schraubengang (31') umfasst, und wobei das Kompressionselement (16') einen Absatz (32), der sich an die Dichtungsmittel (18) anlegt, und einen Schraubengang (30')
umfasst, der mit dem Schraubengang (31') der Stütze (10') zusammenwirkt.

9. Brennstoffzelle nach einem der Ansprüche 1 bis 8, bei der die Peripherie der Elementarzelle (4), die zwischen den Dichtungsmitteln (18) und dem Kompressionsmittel (16, 16') angeordnet ist, eine Peripherie eines Elektrolyts (4.1) in Form einer Membran ist.

10. Brennstoffzelle nach einem der Ansprüche 6 bis 8, bei der die Schraubengänge (30, 31, 30', 31') von Einsätzen gebildet sind.

11. Brennstoffzelle nach einem der Ansprüche 1 bis 10, bei der jedes Kompressionselement (16, 16') einen Boden (16.1) zur Bildung eines Deckels umfasst.

12. Brennstoffzelle nach Anspruch 11, bei der der Boden (16.1) Öffnungen (28) zur Zuführung von Reagenzien zur Elektrode (4.3) umfasst.

13. Brennstoffzelle nach einem der Ansprüche 1 bis 12, umfassend elektrische Leiter (38) in Form eines Gitters, die Elektroden jeder Elementarzelle (4) bedecken und durch elektrische Stecker (34, 36) mit einer elektrischen Schaltung verbunden sind.

14. Brennstoffzelle nach einem der Ansprüche 1 bis 13, bei der die Elementarzellen (4) elektrisch in Serie geschaltet sind.

15. Brennstoffzelle nach einem der Ansprüche 1 bis 14, bei der die Elementarzellen (104) unterschiedliche Größen haben und parallel geschaltet sind.

16. Brennstoffzelle nach einem der Ansprüche 1 bis 15, umfassend mindestens zwei erste Elementarzellen, die in einer ersten Ebene nebeneinander angeordnet sind, mindestens zwei zweite Elementarzellen, die in einer zweiten Ebene nebeneinander angeordnet sind, wobei jede Elementarzelle unter den ersten Elementarzellen gegenüber einer zweien Elementarzelle angeordnet ist, und ein elastisches Mittel (42), das an eine der Elementarzellen (4) in Kompression angelegt ist.

17. Brennstoffzelle nach einem der Ansprüche 1 bis 16 in Kombination mit Anspruch 12, umfassend eine Sauerstoffquelle, die mit der Zuführkammer (6) verbunden ist, wobei die ersten Elektroden (4.2) Anoden bilden und die zweiten Elektroden (4.3) Kathoden bilden, wobei der aus der Raumluft stammende Sauerstoff die Öffnungen der Deckeln benützt.
